**Europäisches Patentamt**

**European Patent Office**

**Office européen des brevets**

(19)

(11) Numéro de publication: **0 048 669**
**A1**

(12) ## DEMANDE DE BREVET EUROPEEN

(21) Numéro de dépôt: **81401446.0**

(22) Date de dépôt: **17.09.81**

(51) Int. Cl.³: **F 02 K 1/70**

---

(30) Priorité: **19.09.80 FR 8020451**

(43) Date de publication de la demande:
**31.03.82 Bulletin 82/13**

(84) Etats contractants désignés:
**DE FR GB**

(71) Demandeur: **SOCIETE NATIONALE D'ETUDE ET DE CONSTRUCTION DE MOTEURS D'AVIATION, "S.N.E.C.M.A."**
**2 Boulevard Victor**
**F-75015 Paris(FR)**

(72) Inventeur: **Legrand, Paul Joseph**
**Résidence du Château avenue des Frênes**
**F-77530 Vaux le Penil(FR)**

(74) Mandataire: **Moinat, François et al,**
**S.N.E.C.M.A. Service des Brevets Boîte Postale 81**
**F-91003 Evry Cedex(FR)**

---

(54) **Dispositif d'inversion de poussée pour turboréacteur multiflux.**

(57) L'invention concerne un dispositif d'inversion de poussée pour turboréacteur multiflux, qui est constitué de deux demi-coquilles (8), mobiles en rotation sous l'action d'un vérin (11) autour d'un axe (30) incliné sur la verticale, grâce à deux articulations (9, 10) placées à chacune de leurs extrémités et conformées de façon telle qu'en position de poussée directe, elles s'escamotent dans la paroi extérieure (3) de la veine secondaire (4), masquant les ouvertures ménagées dans cette paroi (3) et qu'en position d'inversion de poussée, elles obturent la veine secondaire (4) entre la paroi extérieure (3) et la paroi intérieure (2), dégageant lesdites ouvertures de la paroi extérieure (3).

FIG.1

**EP 0 048 669 A1**

Dispositif d'inversion de poussée pour turboréacteur
multiflux.

La présente invention concerne un dispositif d'inversion
de poussée pour turboréacteur multiflux.

Ce type de turboréacteur est du genre comprenant un canal primaire de circulation des gaz dits de flux chaud, constituant
une veine principale d'éjection et comprenant également au
moins un canal coaxial au précédent, annulaire, où circulent
des gaz dits de flux froid et délimité par une paroi extérieure et par une paroi intérieure constituant une veine secondaire d'éjection.

Dans ce type de turboréacteur, en particulier à double flux,
lorsque le taux de dérivation est élevé, l'inversion de poussée met en oeuvre principalement ou uniquement la dérivation
du flux froid.

Les dispositifs connus d'inversion de poussée pour ces applications comportent généralement une série d'éléments du genre
volets ou pétales qui sont déplaçables entre une position de
poussée directe et une position d'inversion de poussée. Dans
la position de poussée directe, ces éléments sont escamotés
dans la paroi extérieure de veine secondaire. Dans la position
d'inversion de poussée, ces éléments se placent entre les parois radialement intérieure et extérieure de la veine secondaire et obturent le canal secondaire d'éjection. Le dispositif
comporte également au moins une ouverture ménagée dans la paroi
extérieure du canal secondaire et lorsque les éléments déplaçables sont en position de poussée directe, ils masquent généralement cette ouverture qui se trouve par contre dégagée pour
permettre le passage des gaz du flux d'éjection de veine secondaire, en position d'inversion de poussée.

Le brevet britannique 1 150 012 décrit ainsi, par exemple, un
dispositif d'inversion de poussée opérant sur un flux froid et
constitué d'une pluralité de volets déviateurs qui pivotent autour d'un axe fixé à une partie de l'enveloppe externe qui effectue un mouvement de translation en position d'inversion de poussée, pour dégager une ouverture de passage des gaz d'éjection entre ladite paroi mobile et une partie fixe de l'enveloppe externe située à l'amont, par rapport au sens de circulation des gaz dans le canal.

Notamment dans le cas d'une application d'un dispositif de ce genre sur une échelle réduite, de sérieuses difficultés de réalisation apparaissent ; du fait de la présence d'une pluralité de volets déviateurs et d'une partie mobile de l'enveloppe externe, les tolérances de fabrication nécessaires sont telles, si l'on veut assurer un fonctionnement correct, que les coûts de fabrication atteignent des niveaux incompatibles avec les exigences d'une production industrielle. Le dispositif inverseur de poussée selon l'inven-tion permet de remédier à de tels inconvénients en ce qu'il comporte des éléments déplaçables obturant le canal secondaire d'éjection et constitués de deux demi-coquilles mobiles en rotation autour d'un axe, géométrique, incliné sur la verticale grâce à deux articulations placées l'une à l'extrémité supérieure, l'autre à l'extrémité inférieure de chaque demi-coquille.

Ce dispositif inverseur de poussée est encore remarquable en ce que chaque demi-coquille a une forme telle que le bord radialement externe, en position d'inversion de poussée, suit exactement le profil de la paroi extérieure de veine secondaire, que le bord radialement interne suit exactement le profil de la paroi intérieure de veine secondaire et que les bords latéraux se conjuguent respectivement avec un îlot supérieur et avec un îlot inférieur appartenant à la structure du canal secondaire et formant la liaison entre la paroi ex-térieure et la paroi intérieure et telle que, en position escamotée, la paroi interne de chaque demi-coquille se raccorde parfaitement au profil externe de la veine secondaire donné par la paroi extérieure du canal secondaire.

Avantageusement chaque ouverture ménagée dans la paroi extérieure de canal secondaire pour le passage du flux d'éjection de veine secondaire comporte une grille d'aubes dont le profil du côté veine est conformé de façon telle qu'il permet le passage du bord d'une demi-coquille lors du pivotement de cette dernière entre une position d'inversion de poussée et une position de poussée directe.

Dans un mode préférentiel, un panneau extérieur est relié à chaque demi-coquille de sorte que la manoeuvre des demi-coquilles entraîne également l'actionnement desdits panneaux dans le sens de la fermeture de l'ouverture ménagée dans la paroi extérieure de veine secondaire, d'une part, et, d'autre part, dans le sens dégageant ladite ouverture, le flux des gaz d'éjection étant orienté après leur passage par ladite ouverture par l'inclinaison desdits panneaux s'ouvrant à l'extérieur de la paroi extérieure de veine secondaire.

Un dispositif inverseur de poussée réalisé conformément à l'invention présente de nombreux avantages. Un bon fonctionnement est obtenu de manière plus aisée en évitant de faire appel comme dans les solutions antérieures à de multiples éléments mobiles (pluralité de volets déviateurs, partie aval de l'enveloppe extérieure mobile, par exemple). L'invention permet de supprimer des éléments délicats et coûteux : rails de guidage, par exemple. L'utilisation selon l'invention d'un seul élément déviateur par côté entraîne également une simplification du système de commande qui ne comporte qu'un seul élément d'actionnement du type vérin et du même coup résoud les problèmes posés par la synchronisation. Il en résulte enfin une réduction intéressante de la masse globale du dispositif qui est un critère important pour les applications envisagées aux transports aériens.

On notera encore que l'intégration du dispositif selon l'invention dans une nacelle impose un minimum de contraintes pour la définition des parois de cette nacelle et en particulier par rapport aux solutions connues antérieures, un traitement acoustique de ces parois est rendu possible sur des surfaces plus importantes, ce qui améliore l'atténuation sonore.

D'autres avantages et caractéristiques de l'invention seront mieux compris à la lecture de la description qui va suivre des exemples de réalisation d'un dispositif inverseur de poussée. Cette description est faite en référence aux dessins annexés dans lesquels :

- la figure 1 est une vue schématique en coupe transversale à l'axe du turboréacteur d'un dispositif d'inversion de poussée selon l'invention ;

- la figure 2 est une vue schématique en coupe longitudinale suivant l'axe du turboréacteur du dispositif d'inversion de poussée de la figure 1 en position de poussée directe ;

- la figure 3 est une vue schématique en coupe longitudinale suivant l'axe du turboréacteur du dispositif d'inversion de poussée de la figure 1 en position d'inversion de poussée ;

- la figure 4 est une vue arrière d'une demi-coquille du dispositif selon l'invention représentée dans les positions de poussée directe et d'inversion de poussée ;

- la figure 5 est une demi-vue de dessus de la demi- coquille de la figure 4 ;

- la figure 6 est une demi-vue de l'avant du turboréacteur de la demi-coquille de la figure 4 ;

- la figure 7 montre une variante d'un dispositif d'inversion de poussée selon l'invention comportant des volets sur la paroi extérieure du canal secondaire représenté suivant une vue schématique en coupe longitudinale;

- la figure 8 représente un autre mode de réalisation d'un dispositif d'inversion de poussée selon l'invention comportant un panneau articulé sur la paroi extérieure du canal secondaire représenté suivant une vue schématique en coupe longitudinale.

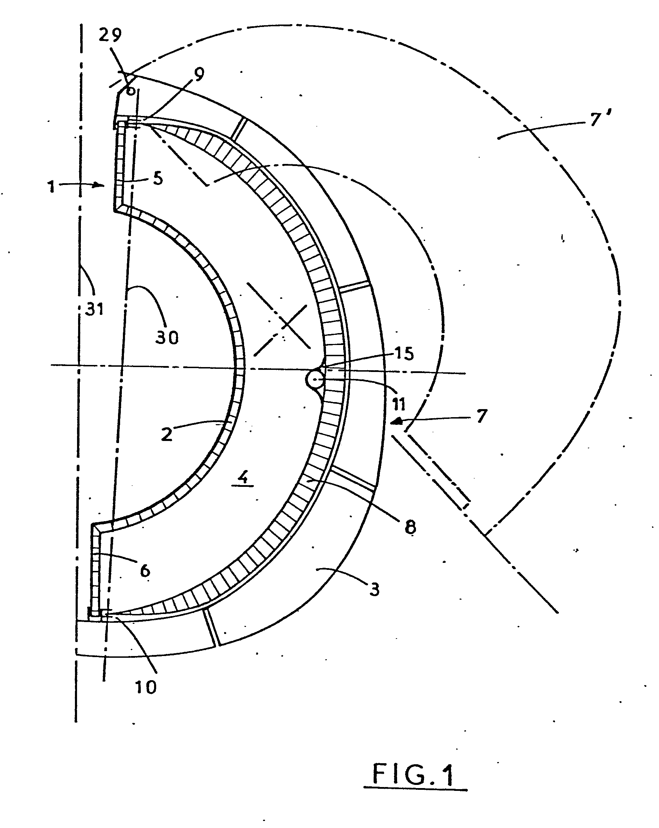

Aux figures 1, 2 et 3, on a donné une représentation schématique d'un dispositif d'inversion de poussée conforme à l'invention. Ce dispositif s'intègre dans une nacelle 1 qui est
du type "canal en D". Cette nacelle 1 est constituée d'une
paroi intérieure 2 et d'une paroi extérieure 3 qui forment le
canal secondaire de l'arrière-corps pour la veine secondaire 4
de circulation des gaz à l'éjection d'un turboréacteur, encore
appelée flux froid de dérivation. Ces parois 2 et 3 sont
réunies en forme de D à la partie supérieure par un ensemble
de liaison dénommé îlot supérieur 5 et à la partie inférieure
par un ensemble de liaison dénommé îlot inférieur 6. Le canal
secondaire est ainsi formé par deux ensembles en D dont
l'ensemble gauche 7 est représenté à la figure 1. Chaque ensemble 7 est articulé en haut au mât avion par trois articulations à charnières 29 et les deux ensembles 7 sont solidarisés en bas de manière connue par un verrouillage à deux
verrous : verrou avant et verrou arrière, qui ne sont pas
représentés aux dessins. En ouvrant ces verrous, les deux
ensembles 7 en D peuvent être désaccouplés et par rotation
autour des charnières supérieures, chaque ensemble 7 peut
être relevé de chaque côté du mât avion, comme schématisé en
position 7' sur la figure 1. Cette disposition facilite
dans tous les cas la maintenance , permet l'accès au moteur
interne et permet la dépose du moteur sans le démontage de
l'inverseur.

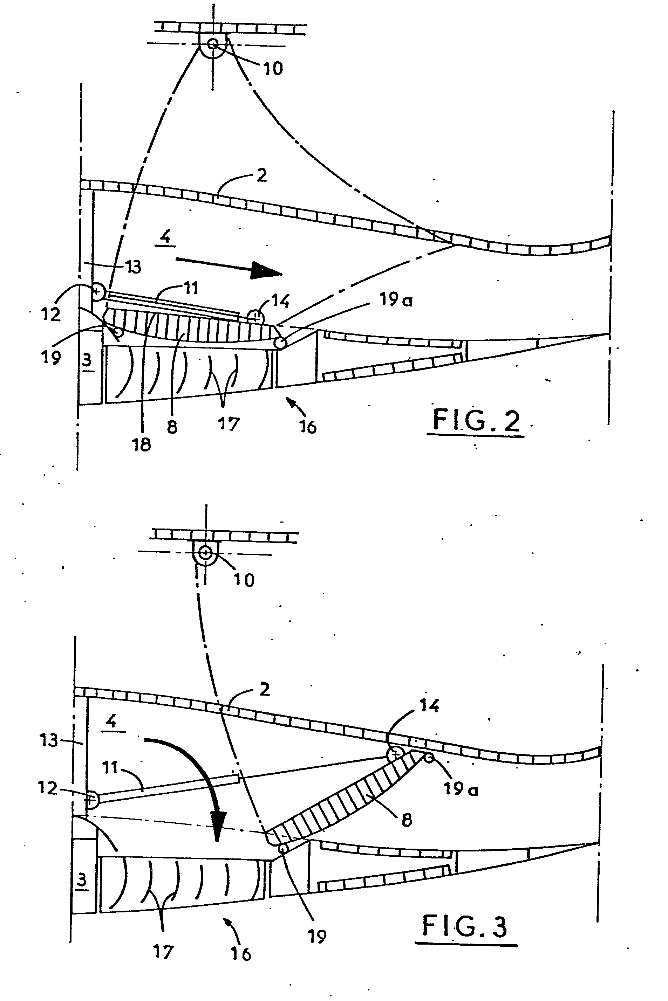

Le dispositif d'inversion de poussée conforme à l'invention
se compose de deux éléments identiques, chacun intégré dans
un ensemble 7 en Ddu canal secondaire. Un de ces éléments est
schématiquement représenté aux figures 1, 2 et 3, en position
de poussée directe aux figures 1 et 2 et en position d'inversion de poussée à la figure 3. Chaque élément comporte
une demi-coquille 8 qui est articulée en un point haut sur
une articulation 9 et en un point bas sur une articulation
10, toutes deux fixées sur des ferrures de la paroi extérieure 3 du canal secondaire. La demi-coquille 8 peut opérer
un mouvement de rotation autour des articulations 9 et 10 géométrique
suivant un axe/de rotation 30 qui a une légère inclinaison sur l'axe vertical 31 moteur. Dans le mode de réalisation qui est décrit à titre d'exemple non limitatif, l'angle d'inclinaison de cet axe de rotation 30 est de 3 degrés 6 minutes sur la verticale. La demi-coquille 8 est manoeuvrée par un vérin 11. Ce vérin 11 est fixé en 12 sur un bras de structure 13 qui relie la paroi extérieure 3 à la paroi intérieure 2 du canal secondaire et qui appartient à un ensemble de liaison situé à la partie médiane de l'ensemble 7 en D et dénommé îlot 9 heures. Le vérin 11 est relié par une chape 14 au bord de la demi-coquille 8 situé à l'aval par rapport au sens de circulation des gaz dans le turboréacteur. Le vérin 11 est équipé d'un carénage et d'un dispositif de protection contre l'abrasion 15.

L'ensemble comporte également une ouverture 16 ménagée dans la paroi extérieure 3 du canal secondaire. Cette ouverture 16 est munie d'une grille d'aubes 17 dont le profil et l'orientation sont déterminés de façon à diriger dans la direction choisie le jet des gaz qui passent par l'ouverture 16 dans la configuration d'inversion de poussée, comme il sera précisé ci-après.

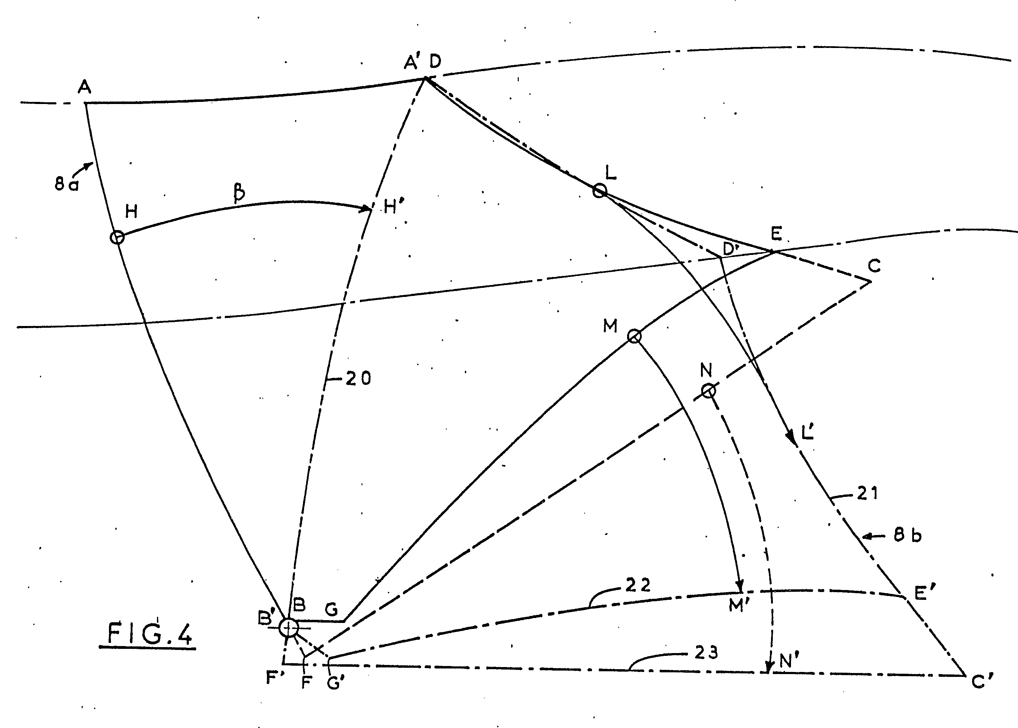

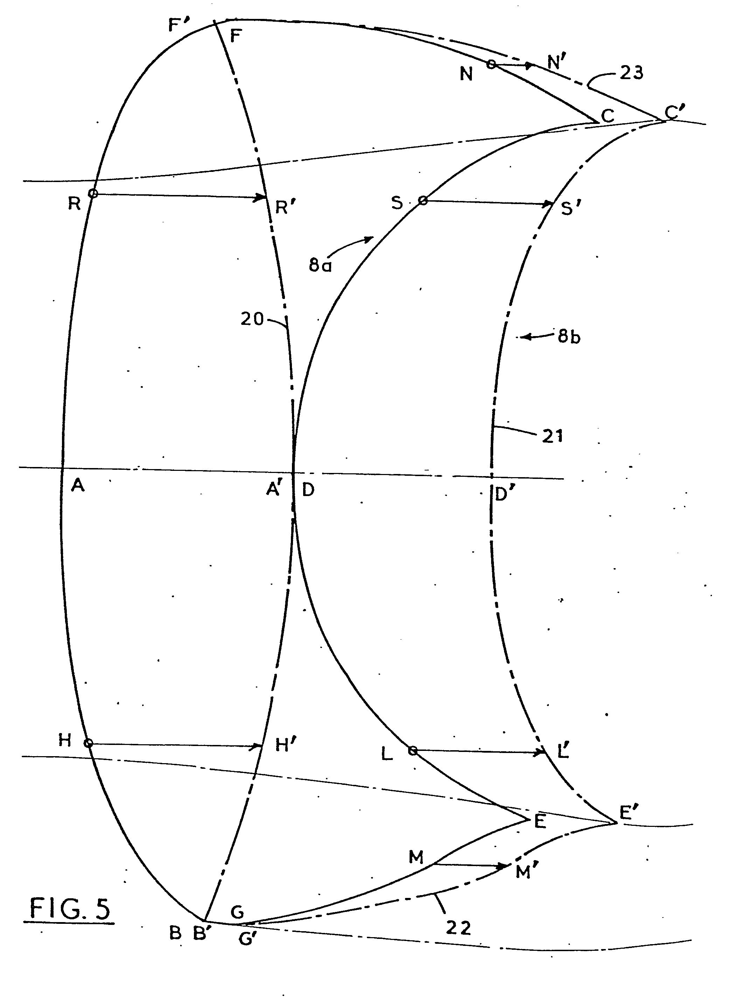

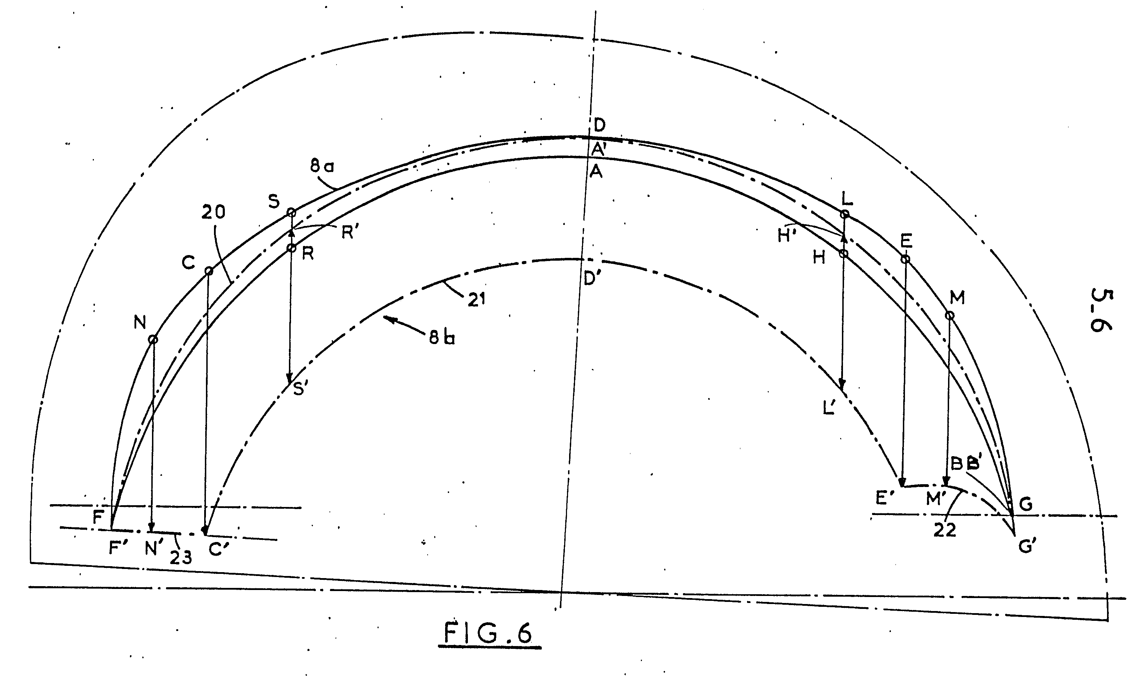

Le fonctionnement général du dispositif d'inversion de poussée selon l'invention est obtenu de la manière suivante. Les figures 1 et 2 présentent la demi-coquille 8 dans une position escamotée. Cette position correspond à un passage du flux froid des gaz dans le canal secondaire vers l'éjection en poussée directe et dans cette position le trajet des gaz se poursuit jusqu'à la sortie à l'arrière du canal. Comme cela apparaît sur la figure 2, dans cette position, la paroi interne 18 de la demi-coquille 8 se raccorde parfaitement au profil externe de la veine secondaire 4 tel qu'il est donné par la paroi extérieure 3 du canal secondaire. Dans cette position, l'étanchéité de la demi-coquille 8 est obtenue grâce à un joint de type élastomère de section circulaire qui est fixé sur la demi-coquille d'une part, à l'avant où ce joint 19 a la forme de découpage avant de l'ouverture 16 et d'autre part, à l'arrière, où ce joint 19a a la forme de découpage arrière de l'ouverture 16. Pour obtenir l'adaptation de la demi-coquille 8 au profil externe de la veine secondaire 4, dans le mode de réalisation décrit, la demi-coquille 8 présente une forme spécialement étudiée telle qu'elle est représentée sur les figures 4, 5 et 6. Sous l'action du vérin 11, la demi-coquille passe de la position escamotée à la position déployée. La position déployée, représentée à la figure 3, correspond à un passage du flux froid des gaz arrivant par le canal secondaire à travers l'ouverture 16 de la paroi extérieure 3 du canal secondaire, le flux d'éjection étant orienté par la grille d'aubes 17 pour obtenir l'inversion de poussée. Les figures 4, 5 et 6 représentent en traits mixtes la forme de la demi-coquille 8 permettant, dans le mode de réalisation décrit, l'adaptation d'une part, du bord amont 20 de la demi-coquille 8 à la paroi extérieure 3 du canal secondaire et d'autre part, celle du bord aval 21 de la demi-coquille 8 à la paroi intérieure 2 du canal secondaire, de même que la conjugaison du bord latéral supérieur 22 avec l'îlot supérieur 5 et celle du bord latéral inférieur 23 de la demi-coquille 8 avec l'îlot inférieur 6. On notera que la demi-coquille 8 présente une épaisseur évolutive d'un bord latéral à l'autre, l'épaisseur maximale étant obtenue dans la partie médiane, suivant une direction 3 heures/9 heures. La forme de la demi-coquille 8 est également adaptée pour permettre le passage de la position escamotée à la position déployée sans qu'aucun point de sa surface ne risque d'interférer avec la paroi extérieure 3 du canal secondaire ni avec la grille d'aubes 17. Dans le mode de réalisation décrit, l'angle de rotation $\beta$ de la demi-coquille entre ses deux positions est de 35 degrés 40 minutes. Sur les figures 4, 5, 6 sont représentés les déplacements des points remarquables A, B, C, D, E, F, G et de quelques points H, L, M, N, R, S en A', B', C', D', E', F', G' et respectivement H', L', M', N', R', S' lorsque la demi-coquille 8 passe de la position escamotée 8a à la position déployée 8b.

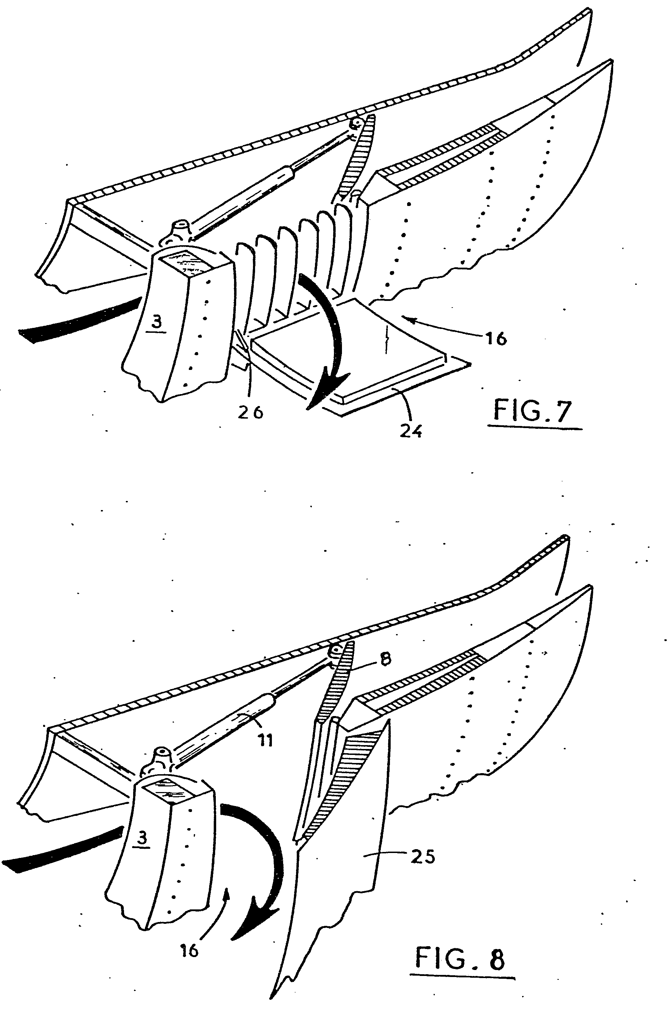

La figure 7 représente une variante dans laquelle au dispositif d'inversion de poussée conforme à l'invention tel qu'il
vient d'être décrit, des volets 24 ont été adjoints à l'ouverture 16 de la paroi extérieure 3 de canal secondaire.
Ces volets 24 sont maintenus en position fermée par des
ressorts 26 en position de poussée directe et ils se raccordent
dans cette position au profil externe de la paroi extérieure
3. En position d'inversion de poussée, ces volets 24 s'ouvrent vers l'extérieur sous la pression des gaz d'éjection
et leur inclinaison contribue à l'orientation des gaz.

Dans un autre mode de réalisation qui conserve les caractéristiques de l'invention telles qu'elles ont été décrites et
qui est représenté à la figure 8, la grille d'aubes 17 de
l'ouverture 16 est supprimée et un panneau 25 articulé sur
la demi-coquille 8 ferme cette ouverture 16 en position de
poussée directe. Lors de la manoeuvre de la demi-coquille 8
par le vérin 11, le panneau 25 en position d'inversion de
poussée s'ouvre également à l'extérieur du canal secondaire
suivant une inclinaison qui est donnée par les moyens de
liaison non représentés entre la demi-coquille 8 et le
panneau 25 et qui dévie les gaz d'éjection suivant l'orientation choisie.

9                    0048669

REVENDICATIONS

1. Dispositif d'inversion de poussée pour turboréacteur
multiflux, du genre comprenant un canal primaire constituant une veine principale d'éjection et au moins un canal
annulaire, coaxial au canal primaire, délimité par une
paroi intérieure (2) et une paroi extérieure (3) constituant une veine secondaire d'éjection (4), ledit dispositif
comportant des éléments déplaçables entre une position de
poussée directe où ils sont escamotés dans la paroi extérieure et une position d'inversion de poussée où ils obturent le canal secondaire d'éjection entre les parois
interne et externe, comportant en outre au moins une ouverture ménagée dans la paroi externe du canal secondaire,
qui est masquée par lesdits éléments en position escamotée
.et qui est dégagée en position d'inversion de poussée pour
permettre le passage des gaz du flux d'éjection de veine
secondaire, caractérisé en ce que lesdits éléments déplaçables sont constitués de deux demi-coquillls (8) mobiles
en rotation autour d'un axe géométrique (30) incliné sur
la verticale, grâce à deux articulations (9, 10) placées
l'une à l'extrémité supérieure, l'autre à l'extrémité inférieure de chaque demi-coquille (8).

2. Dispositif d'inversion de poussée selon la revendication 1 caractérisé en ce que l'angle d'inclinaison de
l'axe géométrique de rotation (30) des deux demi-coquilles
sur la verticale est de 3 degrés 6 minutes d'angle.

3. Dispositif d'inversion de poussée selon l'une quelconque des revendications précédentes caractérisé en ce que
chaque demi-coquille (8) a une forme telle que le bord
radialement externe (20), en position d'inversion de poussée, suit exactement le profil de la paroi extérieure (3)
de veine secondaire, que le bord radialement interne (21) suit exactement le profil de la paroi intérieure (2) de veine secondaire et que les bords latéraux (22, 23) se conjuguent respectivement avec un îlot supérieur (5) et un îlot inférieur (6) appartenant à la structure du canal secondaire et formant la liaison entre la paroi extérieure (3) et la paroi intérieure (2) et telle que, en position escamotée, la paroi interne (18) de chaque demi-coquille (8) se raccorde parfaitement au profil externe de la veine secondaire (4) donné par la paroi extérieure (3) du canal secondaire.

4. Dispositif d'inversion de poussée selon l'une quelconque des revendications précédentes caractérisé en ce que chaque demi-coquille (8) est manoeuvrée par un moyen d'action (11) fixé à l'amont, par rapport au sens de circulation des gaz dans le turboréacteur, sur un bras de structure (13) reliant la paroi extérieure (3) du canal secondaire à la paroi intérieure (2) et relié à l'aval au bord aval de la demi-coquille (8).

5. Dispositif d'inversion de poussée selon l'une quelconque des revendications précédentes caractérisé en ce que chaque ouverture (16) ménagée dans la paroi extérieure (3) de canal secondaire comporte une grille d'aubes (17) dont le profil du côté veine est conformé de façon telle qu'il permet le passage du bord d'une demi-coquille (8) lors du pivotement de cette dernière entre une position d'inversion de poussée et une position de poussée directe.

6. Dispositif d'inversion de poussée selon l'une quelconque des revendications précédentes caractérisé en ce que chaque ouverture (16) ménagée dans la paroi extérieure (3) de canal secondaire est munie de volets (24), ouverts en position d'inversion et maintenus fermés par des ressorts (26) en position de poussée directe.

7. Dispositif d'inversion de poussée selon l'une quelconque des revendications 1 à 5 caractérisé en ce qu'un panneau (25) extérieur est relié à chaque demi-coquille (8) de sorte que la manoeuvre des demi-coquilles (8) entraîne également l'actionnement dudit panneau (25) dans le sens de la fermeture de l'ouverture (16) ménagée dans la paroi extérieure (3) de veine secondaire, d'une part, et d'autre part, dans le sens dégageant ladite ouverture (16), le flux des gaz d'éjection étant orienté après leur passage par ladite ouverture (16) par l'inclinaison dudit panneau (25) s'ouvrant à l'extérieur de la paroi extérieure (3) de veine secondaire.

1_6

FIG.1

2 _ 6

FIG. 2

FIG. 3

0048669

3_6

FIG.4

FIG. 5

0048669

4_6

5_6

FIG.6

6_6

FIG.7

FIG.8

Office européen
des brevets

**RAPPORT DE RECHERCHE EUROPEENNE**

**0048669**

Numéro de la demande

EP 81 40 1446

| Catégorie | Citation du document avec indication, en cas de besoin, des parties pertinentes | Revendication concernée |
|---|---|---|
| | <u>US - A - 3 050 937</u> (JAMES)<br>* Colonne 5, ligne 28 à colonne 8, ligne 36 *<br><br>-- | 1,3,5 |
| | <u>US - A - 3 308 625</u> (SHAW)<br>* Colonne 3, lignes 43-48 *<br><br>-- | 7 |
| A | <u>FR - A - 2 148 521</u> (ROLLS ROYCE) | |
| A | <u>FR - E - 76 925</u> (ROLLS ROYCE) | |
| AD | <u>GB - A - 1 150 012</u> (ROLLS ROYCE)<br>& FR - A - 1 544 066 | |

**DOCUMENTS CONSIDERES COMME PERTINENTS**

**CLASSEMENT DE LA DEMANDE (Int. Cl.³)**

F 02 K   1/70

**DOMAINES TECHNIQUES RECHERCHES (Int. Cl.³)**

F 02 K

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 22-12-1981 | DAVID |

OEB Form 1503.1   06.78